# EUROPEAN PATENT SPECIFICATION

(11) **EP 4 688 899 B1**
(45) Date of publication and mention of the grant of the patent: **02.12.2026**
(21) Application number: 24720673.3
(22) Date of filing: 26.03.2024
(51) Int. Cl.: C08G 18/48, C08F 226/10, C08F 220/54, B33Y 70/00, C08F 283/00, C09J 175/08, C09J 175/06, C09J 175/04, C09D 175/08, C09D 175/06, C09D 175/04, C08G 18/42, B29C 64/124, C08F 290/06

(54) **RADIATION CURABLE COMPOSITION**
STRAHLUNGSHÄRTBARE ZUSAMMENSETZUNG
COMPOSITION DURCISSABLE PAR RAYONNEMENT

(30) Priority: 28.03.2023 US 202363455049 P; 17.04.2023 EP 23168165
(43) Date of publication of application: 11.02.2026
(73) Proprietor: Allnex USA Inc., Alpharetta, Georgia 30009 (US)
(72) Inventor: WANG, Tong, Alpharetta, Georgia 30022 (US); LU, Jin, Alpharetta, Georgia 30022 (US)
(74) Representative: Gabriel, Kiroubagaranne
(86) International application number: PCT/US2024/021433
(87) International publication number: WO 2024/206279

(56) References cited:
- US-A1- 2020 062 998
- US-A1- 2021 009 800

## Description

### Technical Field

The present invention relates to radiation curable compositions which are particularly suitable for use in three-dimensional printing and to articles obtainable from said radiation curable compositions. The invention is set out in the appended set of claims.

### Background

Three-dimensional printing techniques have been widely used for the production of three-dimensional articles and objects starting from a digital model. The materials used in three-dimensional printing processes, often referred to as resins, are usually exposed to either curing or fusing. Photocurable acrylic systems are for example typically used in curing-based three-dimensional printing techniques, whereas thermoplastic resins are generally used in fusing-based techniques. Both resin systems typically suffer from various technical deficiencies. The three-dimensional articles obtained from photocurable acrylic systems usually suffer from inadequate mechanical properties, in particular toughness, due to excessive crosslinking density. As for the use thermoplastic resins, which are typically used in sintering or heat assisted extrusion processes, those usually lead to obtaining articles characterized by inadequate resolution and poor surface finish properties.

A partial solution is described e.g. in WO 2022/136142 (Mc Grail et al.). US 2021/009800 A1 (Xu et al.) describes polymerizable liquids which are suitable for producing 3D printed articles of high resolution and desirable mechanical properties, wherein the polymerizable liquids comprise an acrylate component, a polymeric additive, and a monomeric curing agent, and wherein the acrylate component and monomeric curing agent are copolymerizable upon exposure to light. US 2020/062998A1 (Schümann et al.) describes reactive 2-component adhesive films comprising (a) a polymeric film-forming matrix, (b) at least one reactive monomer or reactive resin, and (c) a reagent selected from an initiator, in particular a radical initiator, or an activator, featuring enhanced heat-and-humidity resistance. Without contesting the technical advantages associated with the solutions known in the art, there is still a need for a material which overcomes at least partially the above-mentioned deficiencies.

### Summary

According to one aspect, the present disclosure relates to a radiation curable composition comprising:
a) from 30 to 70 wt.% of a radiation polymerizable monomer (A) comprising a N-vinyl amide moiety;
b) from 30 to 70 wt.% of a thermoplastic polyurethane (B) having a number average molecular weight (Mn) no greater than 60,000 g/mol, wherein the thermoplastic polyurethane (B) is obtained from a polyol selected from the group consisting of polyester polyols, polyether polyols, polycaprolactone polyols, polycarbonate polyols, and any combinations thereof; and
c) a radiation sensitive polymerization initiator (C);
wherein the wt.% are based on 100 wt.% of the radiation polymerizable monomer (A) and the thermoplastic polyurethane (B).

According to another aspect, the present disclosure is directed to a process for the manufacturing of a radiation curable composition as described above, wherein the process comprises the steps of:
a) bringing the radiation polymerizable monomer (A) in presence of the thermoplastic polyurethane (B) thereby forming a mixture material;
b) optionally, subjecting the mixture material to thermal energy; and
c) optionally, subjecting the mixture material to mechanical mixing.

According to yet another aspect, the present disclosure relates to the use of a radiation curable composition as described above in a three-dimensional printing process, in particular in a three-dimensional printing process using vat (photo)polymerization techniques.

### Detailed description

According to a first aspect, the present disclosure relates to a radiation curable composition comprising:
a) from 30 to 70 wt.% of a radiation polymerizable monomer (A) comprising a N-vinyl amide moiety;
b) from 30 to 70 wt.% of a thermoplastic polyurethane (B) having a number average molecular weight (Mn) no greater than 60,000 g/mol, wherein the thermoplastic polyurethane (B) is obtained from a polyol selected from the group consisting of polyester polyols, polyether polyols, polycaprolactone polyols, polycarbonate polyols, and any combinations thereof; and
c) a radiation sensitive polymerization initiator (C);
wherein the wt.% are based on 100 wt.% of the radiation polymerizable monomer (A) and the thermoplastic polyurethane (B) when taken in combination.

In the context of the present disclosure, it has been surprisingly found that a radiation curable composition as described above is provided with excellent solubility characteristics, even at room temperature (i.e. about 23°C), excellent formulation stability, as well as advantageous formulation flexibility. Advantageously, the radiation curable composition of the present disclosure is and remains in the form of a homogeneous liquid formulation at room temperature upon prolonged storage, whereby the thermoplastic polyurethane (B) is (substantially) fully solubilized (or dissolved) in the radiation curable composition. More advantageously, the thermoplastic polyurethane (B) is (substantially) fully solubilized (or dissolved) in the radiation polymerizable monomer (A).

It has no less surprisingly been found that a radiation curable composition as described above is particularly suitable for forming cured polymeric materials provided with excellent characteristics and performance attributes as regard to mechanical properties (in particular tensile strength, elongation at break and Young's modulus) and volumetric shrinkage.

Without wishing to be bound by theory, it is believed that these excellent characteristics and attributes are due in particular to the use of a specific combination of: (a) a radiation polymerizable monomer (A), and (b) a thermoplastic polyurethane (B) as specifically described above; wherein radiation polymerizable monomer (A) and the thermoplastic polyurethane (B) are comprised in the radiation curable composition in the specific ranges detailed above.

More specifically, it has been surprisingly found that the thermoplastic polyurethane (B) having a number average molecular weight (Mn) no greater than 60,000 g/mol, wherein the thermoplastic polyurethane (B) is obtained (or derived) from a polyol selected from the group consisting of polyester polyols, polyether polyols, polycaprolactone polyols or polycarbonate polyols, contributes to providing cured polymeric materials with the excellent balance of mechanical properties as detailed above. As for the radiation polymerizable monomer (A) comprising a N-vinyl amide moiety, the latter has been surprisingly found to provide outstanding solubility characteristics for the thermoplastic polyurethane (B) as defined above. Still without wishing to be bound by theory, it is further believed that these excellent solubility characteristics are facilitated by the relatively high polarity, high dilution power and superior ability to reduce viscosity build-up attributed to the N-vinyl amide moiety present in the radiation polymerizable monomer (A).

Those are particularly surprising and counterintuitive findings considering that obtaining in particular both high tensile strength and high elongation at break is somewhat technically self-contradicting or at least pretty challenging to achieve.

In the context of the present disclosure, the Applicant was challenged to formulate a radiation curable composition capable of combining at least two compounds having very distinct chemical nature, namely the thermoplastic material (B) and the radiation polymerizable monomer (A) acting formally as a reactive diluent, and which are generally recognized to provide poor compatibility with each other.

As such, the radiation curable composition of the present disclosure is outstandingly suitable for use in a three-dimensional printing process, in particular in a three-dimensional printing using vat (photo)polymerization techniques.

In the context of the present disclosure still, the Applicant successfully managed to combine the good mechanical properties provided by the thermoplastic material (and which is typically used in sintering or heat assisted three-dimensional printing processes) with the ability to use a liquid photopolymer resin (which usually comprise photocurable acrylic systems) which - in the present case - provides various advantageous characteristics such as processing speed, curing speed, high resolution, excellent reproducibility and flexibility when used in three-dimensional printing methods.

It has further been found that a radiation curable composition as described above is) recyclable. In particular, it has been found that after suitable radiation curing, the resulting cured polymeric material may be at least partially (preferably fully) (re)dissolved into a radiation polymerizable monomer (A) as described herein for further (re)use. This is again a particularly surprising and counterintuitive finding considering that radiation cured polymeric materials are thermoset and generally recognized as challenging to recycle.

As such, the radiation curable composition of the present disclosure is outstandingly suitable for use in the circular economy production and consumption model.

The radiation curable composition of the present disclosure comprises, as a first component, a radiation polymerizable monomer (A) comprising a N-vinyl amide moiety in an amount from 30 to 70 wt.%, based on 100 wt.% of the radiation polymerizable monomer (A) and the thermoplastic polyurethane (B).

In one advantageous aspect, the radiation curable composition comprises from 35 to 65 wt.%, from 40 to 60 wt.% or even from 45 to 55 wt.%, of the radiation polymerizable monomer (A), based on 100 wt.% of the radiation polymerizable monomer (A) and the thermoplastic polyurethane (B).

Radiation polymerizable monomers (A) for use herein are not particularly limited, as long as they comprise a N-vinyl amide moiety. Suitable radiation polymerizable monomers (A) for use herein will be easily identified by those skilled in the art in the light of the present disclosure.

According to an advantageous aspect, the radiation polymerizable monomer (A) for use herein has the following general formula (I):

(L)CON(CH=CH₂)(Q) (I)

wherein:
L is a linear, branched or cyclic hydrocarbon radical, optionally substituted by alkyl, hydroxyl or alkoxy groups and/or interrupted by oxygen or nitrogen atoms;
Q is a linear, branched or cyclic hydrocarbon radical, optionally substituted by alkyl, hydroxyl or alkoxy groups and/or interrupted by oxygen or nitrogen atoms; and optionally, L and Q may be covalently linked such as to form a link or a cyclic structure.

According to another advantageous aspect, the radiation polymerizable monomer (A) for use herein is (substantially) free of additional (actinic) radiation-curable functional groups, besides the vinyl group. According to this advantageous aspect, the radiation polymerizable monomer (A) may be referred to as a monofunctional radiation polymerizable monomer.

Monofunctional radiation polymerizable monomers (A) as detailed above have been surprisingly found to advantageously impact the low volumetric shrinkage property of the cured polymeric material resulting from the curing of the radiation curable composition according to the present disclosure. Without wishing to be bound by theory, it is believed that the use of monofunctional radiation polymerizable monomers (A) advantageously impacts the crosslinking density of the cured polymeric material, helps maintaining its level within optimum ranges during the curing process and in particular prevents the formation of excessively high crosslinking density.

According to a more advantageous aspect, the radiation polymerizable monomer (A) for use herein is selected from the group consisting of N-vinyl pyrrolidone; N-vinyl piperidone; N-vinyl caprolactam; N vinyl-3-methyl pyrrolidone; N-vinyl-4-methyl pyrrolidone; N-vinyl-5-methyl pyrrolidone; N-vinyl-3-ethyl pyrrolidone; N-vinyl-3-butyl pyrrolidone; N-vinyl-3,3-dimethyl pyrrolidone; N-vinyl-4,5-dimethyl pyrrolidone; N-vinyl-5,5-dimethyl pyrrolidone; N-vinyl-3,3,5-trimethyl pyrrolidone; N-vinyl-5-methyl-5-ethyl pyrrolidone; N-vinyl-3,4,5-trimethyl-3-ethyl pyrrolidone; N-vinyl-6-methyl-2-piperidone; N-vinyl-6-ethyl-2-piperidone; N-vinyl-3,5-dimethyl-2-piperidone; N-vinyl-4,4-dimethyl-2-piperidone; N-vinyl-6-propyl-2-piperidone; N-vinyl-3-octyl piperidone; N-vinyl-7-methyl caprolactam; N-vinyl-7-ethyl caprolactam; N-vinyl-4-isopropyl caprolactam; N-vinyl-5-isopropyl caprolactam; N-vinyl-4-butyl caprolactam; N-vinyl-5-butyl caprolactam; N-vinyl-4-butyl caprolactam; N-vinyl-5-tert - butyl caprolactam; N-vinyl-4-octyl caprolactam; N-vinyl-5-tert-octyl caprolactam; N-vinyl-4-nonyl caprolactam; N-vinyl-5-tert-nonyl caprolactam; N-vinyl-3,7-dimethyl caprolactam; N-vinyl-3,5-dimethyl caprolactam; N-vinyl-4,6-dimethyl caprolactam; N-vinyl-3,5,7-trimethyl caprolactam; N-vinyl-2-methyl-4-isopropyl caprolactam; N-vinyl-5-isopropyl-7-methyl caprolactam; N-vinyl formamide; N-vinyl acetamide; N-vinyl propionamide; N-vinyl-N-methyl acetamide; N-vinyl-N-methyl propionamide; N-vinyl-N-propyl propionamide; N-vinyl oxazolidinone; N-vinyl-5-methyl oxazolidinone; N-vinyl-4-methyl oxazolidinone; N-vinyl-4,5-dimethyl oxazolidinone; and any mixtures thereof.

According to a more advantageous aspect, the radiation polymerizable monomer (A) is selected from the group consisting of N-vinyl pyrrolidone; N-vinyl piperidone; N-vinyl caprolactam; N-vinyl oxazolidinone; N-vinyl-5-methyl oxazolidinone; N-vinyl formamide; and any mixtures thereof.

According to still a more advantageous aspect, the radiation polymerizable monomer (A) is selected from the group consisting of N-vinyl pyrrolidone; N-vinyl caprolactam; N-vinyl-5-methyl oxazolidinone; N-vinyl formamide; and any mixtures thereof.

According to a preferred aspect, the radiation polymerizable monomer (A) for use herein is selected from the group consisting of N-vinyl pyrrolidone; N-vinyl caprolactam; and any mixtures thereof.

According to a more preferred aspect, the radiation polymerizable monomer (A) for use herein is selected to comprise N-vinyl pyrrolidone.

According to a particularly advantageous aspect, the radiation polymerizable monomer (A) for use herein has a cyclic structure and has preferably the following general formula (II): 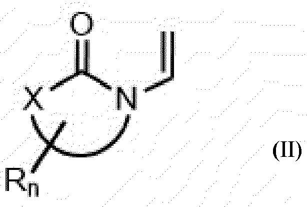 wherein:
X is an oxygen or carbon atom;
R is an alkyl, hydroxyl or alkoxy group; preferably R is an alkyl group; and
n is an integer from 0 to 6, from 0 to 5, from 0 to 4, from 0 to 3, or even from 0 to 2.

In the general formula (II) as described above, group X and the nitrogen atom N are typically linked covalently such as to form a link or a cyclic structure. Advantageously, such cyclic structure comprises a hydrocarbon (main) chain comprising from 2 to 12, from 2 to 10, from 2 to 8, from 2 to 6, or even from 2 to 4 carbon atoms. Advantageously still, the cyclic structure comprises a hydrocarbon (main) chain comprising no greater than 12, no greater than 10, no greater than 8, no greater than 6, or even no greater than 4 carbon atoms.

In the radiation polymerizable monomer (A) having the general formula (II) as described above, n is typically no greater than 6, no greater than 5, no greater than 4, no greater than 3, or even no greater than 2.

In the context of the present disclosure, it has been surprisingly found that radiation polymerizable monomers (A) having a cyclic structure and typically having the general formula (II) as described above, advantageously impact the mechanical properties (in particular tensile strength) of the cured polymeric material resulting from the curing of the radiation curable composition. Without wishing to be bound by theory, it is believed that the use of polymerizable monomers (A) having a cyclic structure advantageously increase the overall glass transition temperature of the radiation curable composition according to the present disclosure, which in turn is believed to have a beneficial impact on the mechanical properties of the cured polymeric material.

The radiation curable composition of the present disclosure comprises, as a second component, a thermoplastic polyurethane (B) having a number average molecular weight (Mn) no greater than 60,000 g/mol, wherein the thermoplastic polyurethane (B) is obtained from a polyol selected from the group consisting of polyester polyols, polyether polyols, polycaprolactone polyols, polycarbonate polyols, and any combinations thereof.

In one advantageous aspect, the radiation curable composition comprises from 35 to 65 wt.%, from 40 to 60 wt.% or even from 45 to 55 wt.%, of the thermoplastic polyurethane (B), based on 100 wt.% of the radiation polymerizable monomer (A) and the thermoplastic polyurethane (B).

Thermoplastic polyurethanes (B) for use herein are not particularly limited, as long as they meet the above-detailed requirements as regard to the number average molecular weight (Mn) and the chemical nature of the starting polyol. Suitable thermoplastic polyurethanes (B) for use herein will be easily identified by those skilled in the art in the light of the present disclosure.

The number average molecular weight (Mn) of the thermoplastic polyurethane (B) is typically measured by conventional gel permeation chromatography (GPC) techniques, well known to those skilled in the art.

According to an advantageous aspect, the thermoplastic polyurethane (B) has a number average molecular weight (Mₙ) no greater than 60,000 g/mol, no greater than 55,000 g/mol, no greater than 50,000 g/mol, no greater than 45,000 g/mol, no greater than 40,000 g/mol, no greater than 35,000 g/mol, no greater than 30,000 g/mol, no greater than 25,000 g/mol, or even no greater than 20,000 g/mol.

According to another advantageous aspect, the thermoplastic polyurethane (B) has a number average molecular weight (Mₙ) in a range from 10,000 to 60,000 g/mol, from 10,000 to 55,000 g/mol, from 15,000 to 50,000 g/mol, from 15,000 to 45,000 g/mol, from 20,000 to 45,000 g/mol, from 20,000 to 40,000 g/mol, from 25,000 to 40,000 g/mol, from 30,000 to 40,000 g/mol, or even from 35,000 to 40,000 g/mol.

In the context of the present disclosure, it has been surprisingly found that thermoplastic polyurethane (B) meeting the above-detailed requirements as regard to the number average molecular weight (Mn) and the chemical nature of the starting polyol, provide excellent solubility characteristics even at room temperature (i.e. at a temperature of about 23°C) in the radiation curable composition and in particular in the radiation polymerizable monomer (A). Thermoplastic materials not meeting any one of these above-detailed requirements have been found to provide at least inadequate solubility characteristics at room temperature in the radiation curable composition and in particular in the radiation polymerizable monomer (A). Without wishing to be bound by theory, it is believed that the use of a thermoplastic polyurethane (B) having a number average molecular weight (Mₙ) no greater than 60,000 g/mol provides the optimal solubility characteristics with respect to at least the very specific type of radiation polymerizable monomer which is represented by the radiation polymerizable monomer (A) comprising a N-vinyl amide moiety.

In an advantageous aspect, the thermoplastic polyurethane (B) for use herein is obtained from a polyol selected from the group consisting of polyester polyols, polyether polyols, polycarbonate polyols, and any combinations thereof.

In a more advantageous aspect, the thermoplastic polyurethane (B) is obtained from a polyol selected from the group of polyester polyols.

In the context of the present disclosure, it has been surprisingly found that thermoplastic polyurethanes (B) obtained from a polyol selected from the group of polyester polyols provide the optimal balance of: (a) solubility characteristics even at room temperature in the radiation curable composition and in particular in the radiation polymerizable monomer (A); and (b) mechanical properties of the cured polymeric material resulting from the curing of the radiation curable composition.

Suitable thermoplastic polyurethanes (B) for use herein may be easily obtained according to manufacturing techniques and processes well known to those skilled in the art, starting from at least one polyol selected from the group consisting of polyester polyols, polyether polyols, polycaprolactone polyols, polycarbonate polyols, and any combinations thereof.

Suitable thermoplastic polyurethanes (B) may be typically obtained by polymerizing a at least one polyol as defined above, at least one polyisocyanate, and optionally at least one chain extender, and using well known methods such as one-shot method and prepolymer method.

According to a typical aspect, the thermoplastic polyurethane (B) is the reaction product of:
a) at least one polyol selected from the group consisting of polyester polyols, polyether polyols, polycaprolactone polyols, polycarbonate polyols, and any combinations thereof;
b) at least one polyisocyanate; and
c) optionally, at least one chain extender.

Typically, the at least one polyisocyanate for use herein is selected from the group consisting of aromatic polyisocyanates, aliphatic polyisocyanates, and any combinations or mixtures thereof.

Typically still, the at least one (optional) chain extender for use herein is selected from the group consisting of diols having a hydrocarbon chain comprising no greater than 6 carbon atoms; in particular ethylene glycol; diethylene glycol; propylene glycol,; propylene glycol; 1,3-propylene glycol; dipropylene glycol; 1,4-butylene glycol; 1,5-pentanediol and 1,6-hexanediol; diamines having a hydrocarbon chain comprising no greater than 6 carbon atoms, in particular ethylenediamine, diamino propane, diamino butane and diamino pentane; and any combinations or mixtures thereof.

Suitable thermoplastic polyurethanes (B) for use herein may alternatively be purchased from chemical suppliers. Commercially available thermoplastic polyurethanes (B) for use in the present disclosure are known, for example, under the trade names "ESTANE^{®}" series or "PEARLBOND^{™}" series from Lubrizol Corporation.

According to an advantageous aspect, the thermoplastic polyurethane (B) is (substantially) free of (actinic) radiation-curable functional groups. Such thermoplastic polyurethanes (B) have been surprisingly found to advantageously impact the low volumetric shrinkage property of the cured polymeric material resulting from the curing of the radiation curable composition according to the present disclosure. Without wishing to be bound by theory, it is believed that the use of thermoplastic polyurethane (B) being (substantially) free of (actinic) radiation-curable functional groups advantageously impacts the crosslinking density of the cured polymeric material, helps maintaining its level within optimum ranges during the curing process and in particular prevents the formation of excessively high crosslinking density.

According to one particular execution, the radiation curable composition according to the disclosure consists in:
a) from 30 to 70 wt.% of a radiation polymerizable monomer (A) comprising a N-vinyl amide moiety;
b) from 30 to 70 wt.% of a thermoplastic polyurethane (B) having a number average molecular weight (Mₙ) no greater than 60,000 g/mol, wherein the thermoplastic polyurethane (B) is obtained from a polyol selected from the group consisting of polyester polyols, polyether polyols, polycaprolactone polyols, polycarbonate polyols, and any combinations thereof; and
c) a radiation sensitive polymerization initiator (C);
wherein the wt.% are based on 100 wt.% of the radiation polymerizable monomer (A) and the thermoplastic polyurethane (B).

The radiation curable composition of the present disclosure further comprises a radiation sensitive polymerization initiator (C). Suitable radiation sensitive polymerization initiators (C) for use herein are not particularly limited and will be easily identified by those skilled in the art in the light of the present disclosure. Any radiation sensitive polymerization initiators commonly known in the art may be used in the context of the present disclosure.

Such an initiator is desirable for assisting in curing of the radiation curable composition. Advantageously, the radiation sensitive polymerization initiator for use herein is a photoinitiator, which therefore absorbs radiation, for example, UV light radiation of sufficient wavelength and intensity to create free radical species and initiate curing of the curable components of the radiation curable composition.

Radiation sensitive polymerization initiators (C) for use herein are commercially available under the trade designations of IRGACURE^{®} and DAROCUR^{®} from BASF. Specific examples of suitable radiation sensitive polymerization initiators (C) include 1 - hydroxy - cyclohexyl - phenyl - ketone (available as BASF IRGACURE^{®} IC-184). Other exemplary radiation sensitive polymerization initiators (C) for use herein are amply described e.g. in US 2018/0100073-A1 (Chopra et al.).

The radiation sensitive polymerization initiator (C) may be present in any suitable or desired amount. In a typical aspect of the disclosure, the total amount of radiation sensitive polymerization initiator (C) included in the radiation curable composition is a range from 0.5 to 15 wt.%, from 1 to 10 wt.%, or even from 1 to 5 wt.%, based on the total weight of the radiation curable composition.

As is customary in the field, the radiation curable composition of the present disclosure may further comprise additional radiation polymerizable compounds in order to adjust certain properties or performance attributes, and meet the requirements of specifically targeted applications.

According to one particular aspect, the radiation curable composition further comprises another radiation polymerizable monomer (D) which is different from the radiation polymerizable monomer (A). Suitable radiation polymerizable monomers (D) for use herein are not particularly limited and will be easily identified by those skilled in the art in the light of the present disclosure.

The radiation polymerizable monomer (D) for use herein may be typically selected from the group consisting of monomers comprising one radiation-curable functional group, monomers comprising two radiation-curable functional groups, monomers comprising three radiation-curable functional groups, and any mixtures thereof. In the context of the present disclosure, the radiation polymerizable monomers (D) may also be referred to as reactive diluents.

In an advantageous aspect, the radiation polymerizable monomer (D) is selected from the group consisting of monofunctional (meth)acrylate monomers, difunctional (meth)acrylate monomers, trifunctional (meth)acrylate monomers, and any mixtures thereof. Exemplary radiation polymerizable monomers (D) for use herein are described e.g. in US 2018/0100073-A1 (Chopra et al.).

According to another particular aspect, the radiation curable composition further comprises a radiation polymerizable oligomer (E). Suitable radiation polymerizable oligomers (E) for use herein are not particularly limited and will be easily identified by those skilled in the art in the light of the present disclosure.

The radiation polymerizable oligomer (E) for use herein may be typically selected from the group consisting of oligomers comprising one radiation-curable functional group, oligomers comprising two radiation-curable functional groups, oligomers comprising three radiation-curable functional groups, and any mixtures thereof.

In an advantageous aspect, the radiation polymerizable oligomer (E) is selected from the group consisting of urethane (meth)acrylate oligomers, polyester (meth)acrylate oligomers, epoxy (meth)acrylate oligomers, and any combinations or mixtures thereof. Exemplary radiation polymerizable oligomers (E) for use herein are described e.g. in US 2018/0100073-A1 (Chopra et al.).

When present, the radiation polymerizable monomer (D) or the radiation polymerizable oligomer (E) as described hereinbefore may be present in any suitable or desired amount, depending on the targeted property or application for the radiation curable composition.

As is customary in the field, the radiation curable composition of the present disclosure may further comprise additional compounds, as optional additives. These include, but are not limited to, dyes, fillers, modifiers, stabilizers and adhesion promotors.

According to a typical aspect of the radiation curable composition of the disclosure, the thermoplastic polyurethane (B) for use herein is (substantially) fully solubilized in the radiation curable composition, thereby forming a (homogeneous) liquid at 23°C.

According to a more typical aspect of the disclosure, the thermoplastic polyurethane (B) for use herein is (substantially) fully solubilized in the radiation polymerizable monomer (A) thereby forming a (homogeneous) liquid at 23°C.

As such, the radiation curable composition of the present disclosure may not qualify as a dispersion or an emulsion. In a typical aspect, the radiation curable composition is in the form of a monophasic homogeneous liquid.

In a typical aspect, the radiation curable composition as described herein is (substantially) non-aqueous.

In another typical aspect of the disclosure, the radiation curable composition is (substantially) 100% solid.

The radiation curable composition of the present disclosure is provided with advantageous viscosity characteristics which makes it particularly suited for use in a three-dimensional printing process, in particular in a three-dimensional printing process using vat (photo)polymerization techniques.

In a typical aspect, the radiation curable composition as described herein has a viscosity no greater than 300 Pa·s, no greater than 280 Pa·s, no greater than 250 Pa·s, no greater than 230 Pa·s, no greater than 200 Pa·s, no greater than 180 Pa·s, no greater than 150 Pa·s, no greater than 130 Pa·s, no greater than 100 Pa·s, no greater than 80 Pa·s, no greater than 60 Pa·s, no greater than 50 Pa·s, no greater than 40 Pa·s, no greater than 30 Pa·s, no greater than 25 Pa·s, or even no greater than 20 Pa·s, when measured at 60°C according to the test method described in the experimental section.

In another typical aspect, the radiation curable composition as described herein has a viscosity in a range from 5 to 300 Pa·s, from 5 to 250 Pa·s, from 10 to 200 Pa·s, from 15 to 150 Pa·s, from 15 to 100 Pa·s, from 15 to 80 Pa·s, from 20 to 60 Pa·s, from 20 to 40 Pa·s, or even from 20 to 30 Pa·s, when measured at 60°C according to the test method described in the experimental section.

As mentioned hereinbefore, the radiation curable composition of the present disclosure is outstandingly suitable for use in various technical applications.

In one advantageous aspect, the radiation curable composition of the present disclosure is for use in a three-dimensional printing process, in particular in a three-dimensional printing process using vat (photo)polymerization techniques.

In another advantageous aspect, the radiation curable composition of the present disclosure is for use in a coating process.

In still another advantageous aspect, the radiation curable composition of the present disclosure is for use in an adhesion or sealing process.

In yet another advantageous aspect, the radiation curable composition as described herein is for the manufacturing of an adhesive or sealant composition.

The radiation curable composition of the present disclosure may be easily obtained according to manufacturing techniques and processes well known to those skilled in the art. Suitable techniques and processes for obtaining the radiation curable composition are not particularly limited and will be easily identified by those skilled in the art in the light of the present disclosure.

According to another aspect, the present disclosure is directed to a process for the manufacturing of a radiation curable composition as described above, wherein the process comprises the steps of:
a) bringing the radiation polymerizable monomer (A) in presence of the thermoplastic polyurethane (B) thereby forming a mixture material;
b) optionally, subjecting the mixture material to thermal energy; and
c) optionally, subjecting the mixture material to mechanical mixing.

In one particular aspect, the step of bringing the radiation polymerizable monomer (A) in presence of the thermoplastic polyurethane (B) is performed by adding the totality of the thermoplastic polyurethane (B) into the totality of the radiation polymerizable monomer (A), or vice-versa, into a suitable reactor.

In another particular aspect, the step of bringing the radiation polymerizable monomer (A) in presence of the thermoplastic polyurethane (B) is performed by successively adding partial amounts of the thermoplastic polyurethane (B) into the totality or partial amounts of the radiation polymerizable monomer (A), or vice-versa, into a suitable reactor.

In one beneficial aspect, the mixture material formed by bringing the radiation polymerizable monomer (A) in presence of the thermoplastic polyurethane (B) is subject to the application of thermal energy, in particular heat. This is in particular advantageous to improve the solubilization characteristics of the thermoplastic polyurethane (B) into the radiation curable composition and in particular into the actinic radiation polymerizable monomer (A). In a typical aspect, the mixture material is subject to a thermal treatment at a temperature in a range from 70 to 90°C, from 70 to 85°C, or even from 80 to 85°C.

In another beneficial aspect, the mixture material formed by bringing the radiation polymerizable monomer (A) in presence of the thermoplastic polyurethane (B) is subject mechanical mixing. This is similarly advantageous to improve the solubilization characteristics of the thermoplastic polyurethane (B) into the radiation curable composition and in particular into the actinic radiation polymerizable monomer (A).

According to an advantageous aspect, the process of the present disclosure results in a radiation curable composition wherein the thermoplastic polyurethane (B) is (substantially) fully solubilized in the radiation curable composition thereby forming a (homogeneous) liquid at 23°C.

According to another advantageous aspect, the process of the present disclosure results in a radiation curable composition wherein the thermoplastic polyurethane (B) is (substantially) fully solubilized in the actinic radiation polymerizable monomer (A) thereby forming a (homogeneous) liquid at 23°C.

According to a typical aspect, the process of the present disclosure further comprises the step of incorporating the radiation sensitive polymerization initiator (C) into the mixture material.

In a particular aspect, the process of the present disclosure further comprises the steps of incorporating another radiation polymerizable monomer (D) and optionally a radiation polymerizable oligomer (E), as described above, into the mixture material.

According to still another aspect, the present disclosure is directed to a process of making a cured polymeric material, comprising the steps of:
a) providing a radiation curable composition as described above; and
b) exposing the radiation curable composition to actinic radiation.

The actinic radiations used for curing preferably are ultraviolet rays, electron beam, X-rays, radioactive rays or high frequency waves. Ultraviolet rays having a wavelength of from 180 to 400 nm are particularly preferred from economical viewpoint. Curing by irradiation may be followed by thermal curing in the presence of suitable external (thermal) crosslinkers.

In a typical aspect, the radiation curable compositions as described above are cured by ultraviolet irradiation, in the presence of a photo-initiator.

According to still another aspect, the present disclosure relates to a process of making a three-dimensional article, comprising the steps of:
a) providing a radiation curable composition as described above;
b) exposing the radiation curable composition to actinic radiation thereby forming a cured cross-section; and
c) repeating steps (a) and (b) thereby resulting in a (cured) three-dimensional article.

Advantageously, the process of making a three-dimensional article comprises vat (photo)polymerization processing steps.

According to yet another aspect, the present disclosure relates to a process of coating an object or a substrate, comprising the steps of:
a) providing a radiation curable composition as described above;
b) applying the composition onto at least part of the surface of the object or the substrate; and
c) curing the composition by subjecting the coated surface to actinic radiation (in particular UV, UV-LED or e-beam).

In still another aspect of the present disclosure, it is provided a process of reclaiming a thermoplastic material for recycling, wherein the process comprises the step of:
a) providing a radiation curable composition as described above;
b) exposing the radiation curable composition to actinic radiation thereby forming a cured polymeric material;
c) mixing the cured polymeric material with a radiation polymerizable monomer (A) thereby forming a mixture material;
d) optionally, subjecting the mixture material to thermal energy;
e) optionally, subjecting the mixture material to mechanical mixing; and
f) optionally, separating the thermoplastic polyurethane (B) from the mixture material.

In yet another aspect, the present disclosure relates to a process of making a recycled radiation cured polymeric material, comprising the steps of:
a) providing a radiation curable composition as described above;
b) exposing the radiation curable composition to actinic radiation thereby forming a cured polymeric material;
c) mixing the cured polymeric material with a radiation polymerizable monomer (A) thereby forming a mixture material;
d) optionally, subjecting the mixture material to thermal energy;
e) optionally, subjecting the mixture material to mechanical mixing;
f) optionally, adding a radiation sensitive polymerization initiator (C) into the mixture material; and
g) exposing the mixture material to actinic radiation thereby forming a recycled radiation cured polymeric material.

In yet another aspect of the disclosure, it is provided a cured polymeric material produced by any one of the processes described hereinbefore.

In one advantageous aspect, the cured polymeric material has an elongation at break value greater than 50 %, greater than 100 %, greater than 150 %, greater than 200 %, greater than 250 %, greater than 300 %, greater than 350 %, greater than 400 %, greater than 450 %, greater than 500 %, greater than 550 %, greater than 600 %, greater than 650 %, or even greater than 700 %, when measured according to the test method described in the experimental section.

In another advantageous aspect, the cured polymeric material as described above has a tensile strength value greater than 2 MPa, greater than 4 MPa, greater than 5 MPa, greater than 8 MPa, greater than 10 MPa, greater than 12 MPa, greater than 15 MPa, greater than 18 MPa, greater than 20 MPa, greater than 22 MPa, greater than 24 MPa, greater than 26 MPa, greater than 28 MPa, or even greater than 30 MPa, when measured according to the test method described in the experimental section.

In still another advantageous aspect, the cured polymeric material has a Young's modulus value greater than 10 MPa, greater than 50 MPa, greater than 100 MPa, greater than 200 MPa, greater than 400 MPa, greater than 450 MPa, greater than 500 MPa, greater than 600 MPa, greater than 700 MPa, greater than 800 MPa, greater than 900 MPa, greater than 1000 MPa, greater than 1100 MPa, or even greater than 1200 MPa, when measured according to the test method described in the experimental section.

In still another advantageous aspect, the cured polymeric material has a volumetric shrinkage value no greater than 10%, no greater than 9.5%, no greater than 9%, no greater than 8.5%, no greater than 8%, no greater than 7.5%, no greater than 7%, no greater than 6.5%, no greater than 6%, no greater than 5.5%, no greater than 5%, no greater than 4.5%, or even no greater than 4%, when measured according to the test method described in the experimental section.

According to an advantageous aspect, the cured polymeric material as described above is selected from the group consisting of cured three-dimensional articles, cured coatings, cured adhesive compositions and cured sealing compositions.

According to another aspect, the present disclosure relates to the use of a radiation curable composition as described above in a three-dimensional printing process, in particular in a three-dimensional printing process using vat (photo)polymerization techniques.

According to still another aspect, the present disclosure relates to the use of a radiation curable composition as described above for the manufacturing of a coating or in a coating process.

According to still another aspect, the present disclosure relates to the use of a radiation curable composition as described above for the manufacturing of an adhesive or sealant composition, or in an adhesion or sealing process.

### EXAMPLES

The present disclosure is further illustrated by the following examples. These examples are merely for illustrative purposes only and are not meant to be limiting on the scope of the appended claims.

Throughout the present disclosure and example section, the following test and measurement methods are used to characterize the exemplary radiation curable compositions and the cured polymeric material obtained therefrom.

### Test Methods:

### A) Molecular weight

The number-average molecular weight (Mn) is determined by conventional gel permeation chromatography (GPC) with Polystyrene standards EasyCal from Agilent (Molecular Weight range: 370 - 110,500 g/mol). The samples are dissolved (1.0% wt./wt.) in tetrahydrofuran (THF) containing 0.5% toluene as Flow rate marker. The analysis are performed by liquid chromatography (Agilent HPLC 1100) equipped with 6 varied pore-sized PLGel GPC columns (300 x 7.5mm x 5µm). The components of the sample are separated by the GPC columns based on their molecular size in solution and detected by a Refractive Index detector. The data are gathered and processed by Agilent's ChemStation GPC data analysis software.

### B) Viscosity

The viscosity of the various radiation curable compositions is measured at 60°C with a cone and plate type rheometer MCR102e (Anton Paar) according to test method DIN EN ISO 3219. A fixed shear rate of 20 s-1 is used.

### C) Solubility

The solubility of the thermoplastic polyurethane (B) in the various precursors of radiation curable compositions is assessed at 23°C and 85°C by visual observation. The test samples used for the assessment are prepared according to the following procedure: The radiation polymerizable monomer (A) and the thermoplastic polyurethane (B) are incorporated into a suitable container and the resulting heterogenous material is then heated at a temperature of 85°C for 2 hours. The heated mixture is then mixed at 2000 rpm using a speedmixer DAC.1 FVZ LR for 2 minutes and then resulting mixture is then heated again at 85°C until the thermoplastic polyurethane (B) is fully solubilized in the mixture material. The heated mixture is further mixed at 2000 rpm for 2 mins using a speedmixer, if however the thermoplastic polyurethane (B) can be fully solubilized in the mixture material. Visual assessment of the solubility the thermoplastic polyurethane (B) into the resulting mixture is performed either at 85°C or at 23°C after the mixture material has been suitably brought back to room temperature.

### D) Mechanical properties

Elongation at break, tensile strength and Young's modulus measurements are performed at 23°C according to test method ASTM D-882-18, and using a single column universal tensile testing machine (Instron's 4467 series). The test specimens used for the measurements are prepared according to the following procedure:
The mixture material comprising the radiation polymerizable monomer (A) and the thermoplastic polyurethane (B) is prepared according to the procedure described above for the solubility testing. Then, the radiation sensitive polymerization initiator (C) is incorporated into the mixture material which is thereafter heated at 70°C for 1 hour. The heated mixture is then mixed at 2000 rpm using a speedmixer DAC.1 FVZ LR until the polymerization initiator (C) is fully solubilized in the mixture material. The resulting material is applied as a 0.127 mm thick film in a frame made of PET film and then covered by another PET film on top. The laminated PET sheet is cured by Fusion Aetek UV Hg lamp (400 W/inch power) at a speed of 50 fpm with 3 passes on each side. The laminated PET sheet is cut into strips having a length of 200 mm and a width of 12.7 mm. PET film on top and bottom is further removed to obtain UV cured free film testing. The overall thickness of UV cured free film is around 0.127 mm.

### E) Volumetric shrinkage

The volumetric shrinkage of the various cured polymeric materials is measured according to the following procedure. The mixture is prepared according to the method described above. The liquid density of the mixture (dm) is determined by a density cup (Gardco 8.32 cc) following test method ASTM D1475-13. The solid density of the cured part is determined by the method described below: the mixture is heated at 70°C and slowly poured into a mold to avoid any bubbles. The mixture is cured under an autoshot UVA lamp for 30 mins. Then, the cured part is removed from the mold, put inside the density cup, and the weight(Wc+p) is measured. Knowing the cup weight (Wc), the weight of cured part (Wp) can be determined as: Wc+p -Wc. With the part inside, the cup is filled up with water and the total weight (Wc+p+w) is measured. The weight of water (Ww) is Ww = Wc+p+w-Wc-Wp. Since the water density (d_{w}) is known, the volume of water Vw can be calculated as: Vw = Ww/dw. The volume of solid part can be thus obtained as: Vp = Vc-Vw, wherein Vc is the volume of cup which is 8.32 cm³. Knowing the weight and the volume, the density of cured part (d_{c}) is calculated as de=Wp/Vp. The volumetric shrinkage is calculated as 100× (de-dm)/dm.

### Raw materials:

In the examples, the following raw materials and starting products are used:
**Pearlbond^{™} 5713 F1** is a polyester-type thermoplastic polyurethane (TPU) having a number average molecular weight (Mₙ) of about 38,800 g/mol, commercially available from Lubrizol. Referred to hereinafter referred as TPU-5713.
**Pearlbond^{™} 5717NT2** is a polyester-type thermoplastic polyurethane (TPU) having a number average molecular weight (Mₙ) of about 20,410 g/mol, commercially available from Lubrizol. Referred to hereinafter referred as TPU-5717.
**Pearlbond^{™} UB410B** is a polyester-type thermoplastic polyurethane (TPU) having a number average molecular weight (Mₙ) of about 34,530 g/mol, commercially available from Lubrizol. Referred to hereinafter referred as TPU-UB410.
**Estane^{®} 58215** is a polyether-type thermoplastic polyurethane (TPU) having a number average molecular weight (Mₙ) of about 73,575 g/mol, commercially available from Lubrizol. Referred to hereinafter referred as TPU-58215.
**Polyamide-6** is a polyamide-type thermoplastic material, commercially available from Goodfellow under the product code AM30-GL-000100. Referred to hereinafter referred as TP-PA6.
**N-vinyl pyrrolidone** is a radiation polymerizable monomer, commercially available from Sigma-Aldrich. Referred to hereinafter referred as NVP.
**N-vinyl caprolactam** is a radiation polymerizable monomer, commercially available from Sigma-Aldrich. Referred to hereinafter referred as NVCL.
**N-Vinyl methyl oxazolidinone** is a radiation polymerizable monomer, commercially available from BASF under the trade designation VMOX^{®}. Referred to hereinafter referred as VMOX.
**Isobornyl acrylate** is a radiation polymerizable cyclic acrylate monomer, commercially available from Allnex. Referred to hereinafter referred as IBOA.
**2-Hydroxyethyl methacrylate** is a radiation polymerizable linear acrylate monomer, commercially available from Sigma-Aldrich. Referred to hereinafter referred as HEMA.
**Ebecryl^{®}118** is a radiation polymerizable aromatic monofunctional acrylate monomer, known as a reactive diluent and commercially available from Allnex. Referred to hereinafter as E-118.
**Genomer 1122** is a radiation polymerizable monofunctional urethane acrylate monomer, known as a reactive diluent and commercially available from Rahn AG. Referred to hereinafter referred as GE-1122.
**Sartomer SR256** is a radiation polymerizable monofunctional acrylate monomer, known as a reactive diluent and commercially available from Arkema. Referred to hereinafter as SR256.
**Ebecryl^{®}130** is a radiation polymerizable cyclic diacrylate monomer, commercially available from Allnex. Referred to hereinafter referred as E-130.
**PI-184** is a photoinitiator, commercially available from Aalchem.
**Ebecryl^{®}8413** is a urethane oligomer, commercially available from Allnex. Referred to hereinafter referred as E-8413.
**Ebecryl^{®}4738** is aliphatic urethane acrylate, commercially available from Allnex. Referred to hereinafter referred as E-4738.

### Examples:

### Example 1: Formulation of exemplary precursors of radiation curable compositions (Ex.1 to Ex.7) and comparative examples (Ex.C1 to Ex.C16).

The exemplary precursors of radiation curable compositions (Ex.1 to Ex.7) and comparative examples (Ex.C1 to Ex.C16) are prepared according to the procedure described hereinbefore for the solubility testing. Comparative examples Ex.C1 to Ex.C3 use a thermoplastic polyurethane having a number average molecular weight (Mₙ) greater than 60,000 g/mol. Comparative examples Ex.C4 to Ex.C13 use radiation polymerizable monomers not comprising a N-vinyl amide moiety and representing commonly used acrylate-based reactive diluents. Comparative examples Ex.C14 to Ex.C16 use a thermoplastic material which is not a thermoplastic polyurethane. The corresponding formulations are presented in Tables 1 to 3 below.

**Table 1: Formulation of exemplary precursors of radiation curable compositions (Ex.1 to Ex.7).**

| Components (in parts) | Ex.1 | Ex.2 | Ex.3 | Ex.4 | Ex.5 | Ex.6 | Ex.7 |
|---|---|---|---|---|---|---|---|
| TPU-5713 | 50 | - | - | 50 | 50 | - | - |
| TPU-5717 | - | 50 | - | - | - | 50 | 50 |
| TPU-UB410 | - | - | 50 | - | - | - | - |
| NVP | 50 | 50 | 50 | - | - | - | - |
| NVCL | - | - | - | 50 | - | 50 | - |
| VMOX | - | - | - | - | 50 | - | 50 |

**Table 2: Formulation of comparative examples (Ex.C1 to Ex.C8).**

| Components (in parts) | Ex.C1 | Ex.C2 | Ex.C3 | Ex.C4 | Ex.C5 | Ex.C6 | Ex.C7 | Ex.C8 |
|---|---|---|---|---|---|---|---|---|
| TPU-58215 | 50 | 35 | 25 | - | - | - | - | - |
| TPU-5713 | - | - | - | 50 | 50 | 50 | 50 | 50 |
| NVP | 50 | 65 | 75 | - | - | - | - | - |
| IBOA | - | - | - | 50 | - | - | - | - |
| GE-1122 | - | - | - | - | 50 | - | - | - |
| HEMA | - | - | - | - | - | 50 | - | - |
| E-118 | - | - | - | - | - | - | 50 | - |
| SR256 | - | - | - | - | - | - | - | 50 |

**Table 3: Formulation of comparative examples (Ex.C9 to Ex.C16).**

| Components (in parts) | Ex.C9 | Ex.C10 | Ex.C11 | Ex.C12 | Ex.C13 | Ex.C14 | Ex.C15 | Ex.C16 |
|---|---|---|---|---|---|---|---|---|
| TPU-5717 | 50 | 50 | 50 | 50 | 50 | - | - | - |
| TP-PA6 | - | - | - | - | - | 5 | 5 | 5 |
| NVP | - | - | - | - | - | 95 | - | - |
| NVCL | - | - | - | - | - | - | 95 | - |
| VMOX | - | - | - | - | - | - | - | 95 |
| IBOA | 50 | - | - | - | - | - | - | - |
| HEMA | - | 50 | - | - | - | - | - | - |
| E-118 | - | - | 50 | - | - | - | - | - |
| GE-1122 | - | - | - | 50 | - | - | - | - |
| SR256 | - | - | - | - | 50 | - | - | - |

### Example 2: Characteristics and solubilization performance of the exemplary precursors of radiation curable compositions (Ex.1 to Ex.7) and comparative examples (Ex.C1 to Ex.C16).

The characteristics and solubilization performance of exemplary precursors of radiation curable compositions (Ex.1 to Ex.7) and comparative examples (Ex.C1 to Ex.C16) have been assessed at 23°C and 85°C according to the test method described hereinbefore. The results are presented in Table 4 below.

**Table 4: Characteristics and stability performance of the exemplary precursors of radiation curable compositions (Ex.1 to Ex.7) and comparative examples (Ex.C1 to Ex.C16).**

| | Physical appearance of the mixture at 23°C | Physical appearance of the mixture at 85°C |
|---|---|---|
| Ex.1 | Homogeneous viscous liquid ^{[1]} | Homogeneous viscous liquid ^{[1]} |
| Ex.2 | Homogeneous viscous liquid ^{[1]} | Homogeneous viscous liquid ^{[1]} |
| Ex.3 | Homogeneous viscous liquid ^{[1]} | Homogeneous viscous liquid ^{[1]} |
| Ex.4 | Homogeneous viscous liquid ^{[1]} | Homogeneous viscous liquid ^{[1]} |
| Ex. 5 | Homogeneous viscous liquid ^{[1]} | Homogeneous viscous liquid ^{[1]} |
| Ex.6 | Homogeneous viscous liquid ^{[1]} | Homogeneous viscous liquid ^{[1]} |
| Ex.7 | Homogeneous viscous liquid ^{[1]} | Homogeneous viscous liquid ^{[1]} |
| Ex.C1 | Heterogeneous mixture ^{[2]} | Heterogeneous mixture ^{[2]} |
| Ex.C2 | Heterogeneous mixture ^{[2]} | Heterogeneous mixture ^{[2]} |
| Ex.C3 | Heterogeneous mixture ^{[2]} | Heterogeneous mixture ^{[2]} |
| Ex.C4 | Heterogeneous mixture ^{[3]} | Heterogeneous mixture ^{[3]} |
| Ex.C5 | Heterogeneous mixture ^{[3]} | Heterogeneous mixture ^{[3]} |
| Ex.C6 | Heterogeneous mixture ^{[4]} | Heterogeneous mixture ^{[4]} |
| Ex.C7 | Heterogeneous mixture ^{[4]} | Heterogeneous mixture ^{[4]} |
| Ex.C8 | Heterogeneous mixture ^{[4]} | Heterogeneous mixture ^{[4]} |
| Ex.C9 | Heterogeneous mixture ^{[3]} | Heterogeneous mixture ^{[3]} |
| Ex.C10 | Heterogeneous mixture ^{[4]} | Heterogeneous mixture ^{[4]} |
| Ex.C11 | Heterogeneous mixture ^{[4]} | Heterogeneous mixture ^{[4]} |
| Ex.C12 | Heterogeneous mixture ^{[4]} | Heterogeneous mixture ^{[4]} |
| Ex.C13 | Heterogeneous mixture ^{[4]} | Heterogeneous mixture ^{[4]} |
| Ex.C14 | Heterogeneous mixture ^{[3]} | Heterogeneous mixture ^{[3]} |
| Ex.C15 | Heterogeneous mixture ^{[3]} | Heterogeneous mixture ^{[3]} |
| Ex.C16 | Heterogeneous mixture ^{[3]} | Heterogeneous mixture ^{[3]} |

| | | |
|---|---|---|
| ^{[1]} The thermoplastic polyurethane is fully dissolved into the reaction mixture. ^{[2]} Gel with undissolved thermoplastic polyurethane particles. ^{[3]} The thermoplastic polyurethane or polyamide does not dissolve into the reaction mixture. ^{[4]} Gel with partially dissolved thermoplastic polyurethane particles. | | |

As can be seen from the results shown in Table 4, the precursors of radiation curable compositions according to the present disclosure (Ex.1 to Ex.7) are provided with excellent solubility characteristics even at 23°C, excellent formulation stability, as well as advantageous formulation flexibility. In contrast, the compositions of the comparative examples (Ex.C1 to Ex.C16) are less advantageous. In particular, the comparative compositions are typically deficient in terms of solubility characteristics even at higher temperatures.

### Example 3: Formulations of exemplary radiation curable compositions (Ex.8 to Ex.16) and comparative example (Ex.C17).

The exemplary radiation curable compositions (Ex.8 to Ex.16) and comparative example (Ex.C17) are prepared according to the procedure described hereinbefore for the mechanical properties testing. Comparative example Ex.C17 uses a benchmark radiation curable formulation recognized to have excellent mechanical properties. The corresponding formulations are presented in Table 5 below.

**Table 5: Formulation of exemplary radiation curable compositions (Ex.8 to Ex.16) and comparative example (Ex.C17).**

| Components (in parts) | Ex.8 | Ex.9 | Ex.10 | Ex.11 | Ex.12 | Ex.13 | Ex.14 | Ex.15 | Ex.16 | Ex.C17 |
|---|---|---|---|---|---|---|---|---|---|---|
| TPU-5713 | 50 | 50 | 50 | - | - | 40 | 40 | 40 | 30 | - |
| TPU-5717 | - | - | - | 50 | 50 | - | - | - | - | - |
| NVP | 50 | - | - | 50 | | 60 | - | - | - | - |
| NVCL | - | 50 | - | | 50 | - | 60 | - | - | - |
| VMOX | - | - | 50 | | - | - | - | 60 | 70 | - |
| E-8413 | - | - | - | - | - | - | - | - | - | 100 |
| PI-184 | 4 | 4 | 4 | 4 | 4 | 4 | 4 | 4 | 4 | 4 |

### Example 4: Mechanical performance and viscosity characteristics of exemplary radiation curable compositions (Ex.8 to Ex.16) and comparative example (Ex.C17).

The mechanical performance of exemplary radiation curable compositions (Ex.8 to Ex.16) and comparative example (Ex.C17) have been determined at 23°C according to the test method described hereinbefore. The viscosity characteristics have been determined at 60°C according to the test method described hereinbefore The results are presented in Table 6 below.

**Table 6: Mechanical performance and viscosity characteristics of exemplary radiation curable compositions (Ex.8 to Ex.16) and comparative example (Ex.C17).**

| | Tensile strength in MPa | Elongation at break in % | Young's modulus in MPa | Viscosity at 60°C in Pa·s |
|---|---|---|---|---|
| Ex.8 | 32 | 707 | 561 | 172 |
| Ex.9 | 25 | 721 | 407 | 284 |
| Ex.10 | 17 | 438 | 87 | 302 |
| Ex.11 | 24 | 472 | 856 | 28.5 |
| Ex.12 | 10 | 388 | 330 | 50.9 |
| Ex.13 | 22 | 190 | 1277 | 53.2 |
| Ex.14 | 21 | 495 | 873 | 105 |
| Ex.15 | 15 | 226 | 273 | 101 |
| Ex.16 | 13 | 60 | 264 | 21.8 |
| Ex.C17 | 14 | 495 | 6 | 37 |

As can be seen from the results shown in Table 6, the radiation curable compositions according to the present disclosure (Ex.8 to Ex.16) are provided with excellent balance of mechanical properties. In contrast, the composition of the comparative example Ex.C17 is less advantageous. In particular, the comparative composition is typically deficient in terms of Young's modulus.

### Example 5: Volumetric shrinkage performance of exemplary radiation curable composition (Ex.11) and comparative example (Ex.C18).

The volumetric shrinkage performance of exemplary radiation curable composition (Ex.11) and comparative example (Ex.C18) have been determined according to the test method described hereinbefore. Comparative example Ex.C18 uses a benchmark radiation curable formulation (a mixture of E-4738 and E130 in a 44/56 weight ratio) recognized to have excellent volumetric shrinkage property. The formulation of comparative example Ex.C18 is obtained by adding 4 parts of photoinitiator (PI-184) to 100 parts of radiation curable formulation (E-4738/E130 in a 44/56 ratio). The results are presented in Table 7 below.

**Table 7: Volumetric shrinkage performance exemplary radiation curable composition (Ex.11) and comparative example (Ex.C18).**

| | Ex.11 | Ex.C18 |
|---|---|---|
| Volumetric shrinkage in % | 3.8 | 6.1 |

As can be seen from the results shown in Table 7, the radiation curable composition according to the present disclosure (Ex.11) is provided with excellent volumetric shrinkage performance. In contrast, the benchmark composition of the comparative example Ex.C18 is less advantageous.

### Example 6: Recyclability performance of an exemplary radiation curable composition (Ex.18 to Ex.19).

The recyclability performance of exemplary radiation curable composition (Ex. 11) has been determined by mixing the radiation cured polymeric material (referred to hereinafter as RCPM.11) resulting from the radiation curing of radiation curable composition (Ex.11) with radiation polymerizable monomer NVP. The resulting mixtures (Ex.18 to Ex.19) are then heated at a temperature of 85°C for 2 hours. The heated mixture is then mixed at 2000 rpm using a speedmixer DAC.1 FVZ LR for 2 minutes and then resulting mixture is then heated again at 85°C until the radiation cured polymeric material is fully solubilized in the mixture material. The corresponding formulations (Ex.18 to Ex. 19) and the results of the recyclability performance testing are presented in Table 8 below.

**Table 8: Formulations of Ex.18 and Ex.19.**

| Components (in parts) | Ex.18 | Ex.19 |
|---|---|---|
| RCPM.11 | 34 | 50 |
| NVP | 66 | 50 |
| | | |
| Physical appearance of the mixture at 85°C | Homogeneous viscous liquid ^{[5]} | Homogeneous viscous liquid ^{[5]} |
| Physical appearance of the mixture at 23°C | Homogeneous viscous liquid ^{[5]} | Homogeneous viscous liquid ^{[5]} |

| | | |
|---|---|---|
| ^{[5]} The radiation cured polymeric material is fully dissolved into the reaction mixture. | | |

As can be seen from the results shown in Table 8, the radiation curable composition according to the present disclosure (Ex.11) is provided with excellent recyclability characteristics. The corresponding formulations (Ex.18 to Ex.19) may be exposed to actinic radiation thereby forming anew a (recycled) radiation cured polymeric material. The addition of further radiation sensitive polymerization initiator (C) might be required.

## Claims

1. A radiation curable composition comprising:
a) from 30 to 70 wt.% of a radiation polymerizable monomer (A) comprising a N-vinyl amide moiety;
b) from 30 to 70 wt.% of a thermoplastic polyurethane (B) having a number average molecular weight (Mₙ) no greater than 60,000 g/mol, wherein the thermoplastic polyurethane (B) is obtained from a polyol selected from the group consisting of polyester polyols, polyether polyols, polycaprolactone polyols, polycarbonate polyols, and any combinations thereof; and
c) a radiation sensitive polymerization initiator (C);
wherein the wt.% are based on 100 wt.% of the radiation polymerizable monomer (A) and the thermoplastic polyurethane (B).

2. A radiation curable composition according to claim 1, wherein the radiation polymerizable monomer (A) has the following general formula (I):
(L)CON(CH=CH₂)(Q) (I)
wherein:
L is a linear, branched or cyclic hydrocarbon radical, optionally substituted by alkyl, hydroxyl or alkoxy groups and/or interrupted by oxygen or nitrogen atoms;
Q is a linear, branched or cyclic hydrocarbon radical, optionally substituted by alkyl, hydroxyl or alkoxy groups and/or interrupted by oxygen or nitrogen atoms; and
optionally, L and Q may be covalently linked such as to form a link or a cyclic structure.

3. A radiation curable composition according to any one of claim 1 or 2, wherein the radiation polymerizable monomer (A) has the following general formula (II): 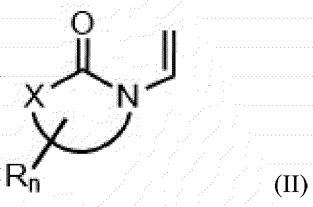 wherein:
X is an oxygen or carbon atom;
R is an alkyl, hydroxyl or alkoxy group; and
n is an integer from 0 to 6, from 0 to 5, from 0 to 4, from 0 to 3, or even from 0 to 2.

4. A radiation curable composition according to any one of the preceding claims, wherein the radiation polymerizable monomer (A) is selected from the group consisting of N-vinyl pyrrolidone; N-vinyl piperidone; N-vinyl caprolactam; N vinyl-3-methyl pyrrolidone; N-vinyl-4-methyl pyrrolidone; N-vinyl-5-methyl pyrrolidone; N-vinyl-3-ethyl pyrrolidone; N-vinyl-3-butyl pyrrolidone; N-vinyl-3,3-dimethyl pyrrolidone; N-vinyl-4,5-dimethyl pyrrolidone; N-vinyl-5,5-dimethyl pyrrolidone; N-vinyl-3,3,5-trimethyl pyrrolidone; N-vinyl-5-methyl-5-ethyl pyrrolidone; N-vinyl-3,4,5-trimethyl-3-ethyl pyrrolidone; N-vinyl-6-methyl-2-piperidone; N-vinyl-6-ethyl-2-piperidone; N-vinyl-3,5-dimethyl-2-piperidone; N-vinyl-4,4-dimethyl-2-piperidone; N-vinyl-6-propyl-2-piperidone; N-vinyl-3-octyl piperidone; N-vinyl-7-methyl caprolactam; N-vinyl-7-ethyl caprolactam; N-vinyl-4-isopropyl caprolactam; N-vinyl-5-isopropyl caprolactam; N-vinyl-4-butyl caprolactam; N-vinyl-5-butyl caprolactam; N-vinyl-4-butyl caprolactam; N-vinyl-5-tert -butyl caprolactam; N-vinyl-4-octyl caprolactam; N-vinyl-5-tert-octyl caprolactam; N-vinyl-4-nonyl caprolactam; N-vinyl-5-tert-nonyl caprolactam; N-vinyl-3,7-dimethyl caprolactam; N-vinyl-3,5-dimethyl caprolactam; N-vinyl-4,6-dimethyl caprolactam; N-vinyl-3,5,7-trimethyl caprolactam; N-vinyl-2-methyl-4-isopropyl caprolactam; N-vinyl-5-isopropyl-7-methyl caprolactam; N-vinyl formamide; N-vinyl acetamide; N-vinyl propionamide; N-vinyl-N-methyl acetamide; N-vinyl-N-methyl propionamide; N-vinyl-N-propyl propionamide; N-vinyl oxazolidinone; N-vinyl-5-methyl oxazolidinone; N-vinyl-4-methyl oxazolidinone; N-vinyl-4,5-dimethyl oxazolidinone; and any mixtures thereof.

5. A radiation curable composition according to any one of the preceding claims, wherein the radiation polymerizable monomer (A) is selected from the group consisting of N-vinyl pyrrolidone; N-vinyl caprolactam; N-vinyl-5-methyl oxazolidinone; N-vinyl formamide; and any mixtures thereof.

6. A radiation curable composition according to any one of the preceding claims, comprising:
a) from 35 to 65 wt.%, from 40 to 60 wt.% or even from 45 to 55 wt.%, of the radiation polymerizable monomer (A);
b) from 35 to 65 wt.%, from 40 to 60 wt.% or even from 45 to 55 wt.%, of the thermoplastic polyurethane (B); and
c) a radiation sensitive polymerization initiator (C);
wherein the wt.% are based on 100 wt.% of the radiation polymerizable monomer (A) and the thermoplastic polyurethane (B).

7. A radiation curable composition according to any one of the preceding claims, wherein the thermoplastic polyurethane (B) has a number average molecular weight (Mₙ) no greater than 60,000 g/mol, no greater than 55,000 g/mol, no greater than 50,000 g/mol, no greater than 45,000 g/mol, no greater than 40,000 g/mol, no greater than 35,000 g/mol, no greater than 30,000 g/mol, no greater than 25,000 g/mol, or even no greater than 20,000 g/mol.

8. A radiation curable composition according to any one of the preceding claims, which further comprises another radiation polymerizable monomer (D) which is different from the radiation polymerizable monomer (A) or a further radiation polymerizable oligomer (E).

9. A process for the manufacturing of a radiation curable composition according to any one of the preceding claims, wherein the process comprises the steps of:
a) bringing the radiation polymerizable monomer (A) in presence of the thermoplastic polyurethane (B) thereby forming a mixture material;
b) optionally, subjecting the mixture material to thermal energy; and
c) optionally, subjecting the mixture material to mechanical mixing.

10. A process of making a cured polymeric material, comprising the steps of:
a) providing a radiation curable composition according to any one of claims 1 to 8; and
b) exposing the radiation curable composition to actinic radiation.

11. A cured polymeric material produced by a process according to claim 10, which has an elongation at break value greater than 50 %, greater than 100 %, greater than 150 %, greater than 200 %, greater than 250 %, greater than 300 %, greater than 350 %, greater than 400 %, greater than 450 %, greater than 500 %, greater than 550 %, greater than 600 %, greater than 650 %, or even greater than 700 %, when measured according to the test method described in the experimental section.

12. A cured polymeric material according to claim 11, which has a tensile strength value greater than 2 MPa, greater than 4 MPa, greater than 5 MPa, greater than 8 MPa, greater than 10 MPa, greater than 12 MPa, greater than 15 MPa, greater than 18 MPa, greater than 20 MPa, greater than 22 MPa, greater than 24 MPa, greater than 26 MPa, greater than 28 MPa, or even greater than 30 MPa, when measured according to the test method described in the experimental section.

13. A cured polymeric material according to any one of claim 11 or 12, which has a volumetric shrinkage value no greater than 10%, no greater than 9.5%, no greater than 9%, no greater than 8.5%, no greater than 8%, no greater than 7.5%, no greater than 7%, no greater than 6.5%, no greater than 6%, no greater than 5.5%, no greater than 5%, no greater than 4.5%, or even no greater than 4%, when measured according to the test method described in the experimental section.

14. Use of a radiation curable composition according to any one of claims 1 to 8 in a three-dimensional printing process, in particular in a three-dimensional printing process using vat (photo)polymerization techniques.

15. Use of a radiation curable composition according to any one of claims 1 to 8 for the manufacturing of a coating or in a coating process, for the manufacturing of an adhesive or in an adhesion process, or for the manufacturing of a sealant or in a sealing process.

## Patentansprüche

1. Strahlungshärtbare Zusammensetzung, umfassend:
a) 30 bis 70 Gew.-% eines strahlungspolymerisierbaren Monomers (A), das eine N-Vinylamid-Gruppe umfasst;
b) 30 bis 70 Gew.-% eines thermoplastischen Polyurethans (B) mit einem zahlenmittleren Molekulargewicht (Mₙ) von nicht mehr als 60.000 g/mol, wobei das thermoplastische Polyurethan (B) aus einem Polyol erhalten wird, das ausgewählt ist aus der Gruppe bestehend aus Polyesterpolyolen, Polyetherpolyolen, Polycaprolactonpolyolen, Polycarbonatpolyolen und beliebigen Kombinationen davon; und
c) einen strahlungsempfindlichen Polymerisationsinitiator (C);
wobei sich die Gew.-% auf 100 Gew.-% des strahlungspolymerisierbaren Monomers (A) und des thermoplastischen Polyurethans (B) beziehen.

2. Strahlungshärtbare Zusammensetzung nach Anspruch 1, wobei das strahlungspolymerisierbare Monomer (A) die folgende allgemeine Formel (I) aufweist:
(L)CON(CH=CH₂)(Q) (I)
wobei:
L ein linearer, verzweigter oder cyclischer Kohlenwasserstoffrest ist, der gegebenenfalls durch Alkyl-, Hydroxyl- oder Alkoxygruppen substituiert und/oder durch Sauerstoff- oder Stickstoffatome unterbrochen ist;
Q ein linearer, verzweigter oder cyclischer Kohlenwasserstoffrest ist, der gegebenenfalls durch Alkyl-, Hydroxyl- oder Alkoxygruppen substituiert und/oder durch Sauerstoff- oder Stickstoffatome unterbrochen ist; und
gegebenenfalls können L und Q kovalent verbunden sein, so dass sie eine Verknüpfung oder eine cyclische Struktur bilden.

3. Strahlungshärtbare Zusammensetzung nach einem der Ansprüche 1 oder 2, wobei das strahlungspolymerisierbare Monomer (A) die folgende allgemeine Formel (II) aufweist: 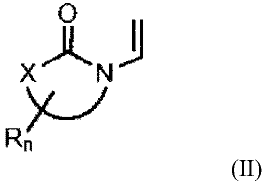 wobei:
X ein Sauerstoff- oder Kohlenstoffatom ist;
R eine Alkyl-, Hydroxyl- oder Alkoxygruppe ist; und
n eine ganze Zahl von 0 bis 6, von 0 bis 5, von 0 bis 4, von 0 bis 3 oder sogar von 0 bis 2 ist.

4. Strahlungshärtbare Zusammensetzung nach einem der vorstehenden Ansprüche, wobei das strahlungspolymerisierbare Monomer (A) ausgewählt ist aus der Gruppe bestehend aus N-Vinylpyrrolidon; N-Vinylpiperidon; N-Vinylcaprolactam; N-Vinyl-3-methylpyrrolidon; N-Vinyl-4-methylpyrrolidon; N-Vinyl-5-methylpyrrolidon; N-Vinyl-3-ethylpyrrolidon; N-Vinyl-3-butylpyrrolidon; N-Vinyl-3,3-dimethylpyrrolidon; N-Vinyl-4,5-dimethylpyrrolidon; N-Vinyl-5,5-dimethylpyrrolidon; N-Vinyl-3,3,5-trimethylpyrrolidon; N-Vinyl-5-methyl-5-ethylpyrrolidon; N-Vinyl-3,4,5-trimethyl-3-ethylpyrrolidon; N-Vinyl-6-methyl-2-piperidon; N-Vinyl-6-ethyl-2-piperidon; N-Vinyl-3,5-dimethyl-2-piperidon; N-Vinyl-4,4-dimethyl-2-piperidon; N-Vinyl-6-propyl-2-piperidon; N-Vinyl-3-octylpiperidon; N-Vinyl-7-methylcaprolactam; N-Vinyl-7-ethylcaprolactam; N-Vinyl-4-isopropylcaprolactam; N-Vinyl-5-isopropylcaprolactam; N-Vinyl-4-butylcaprolactam; N-Vinyl-5-butylcaprolactam; N-Vinyl-4-butylcaprolactam; N-Vinyl-5-tert-butylcaprolactam; N-Vinyl-4-octylcaprolactam; N-Vinyl-5-tert-octylcaprolactam; N-Vinyl-4-nonylcaprolactam; N-Vinyl-5-tert-nonylcaprolactam; N-Vinyl-3,7-dimethylcaprolactam; N-Vinyl-3,5-dimethylcaprolactam; N-Vinyl-4,6-dimethylcaprolactam; N-Vinyl-3,5,7-trimethylcaprolactam; N-Vinyl-2-methyl-4-isopropylcaprolactam; N-Vinyl-5-isopropyl-7-methylcaprolactam; N-Vinylformamid; N-Vinylacetamid; N-Vinylpropionamid; N-Vinyl-N-methylacetamid; N-Vinyl-N-methylpropionamid; N-Vinyl-N-propylpropionamid; N-Vinyloxazolidinon; N-Vinyl-5-methyloxazolidinon; N-Vinyl-4-methyloxazolidinon; N-Vinyl-4,5-dimethyloxazolidinon; und beliebigen Mischungen davon.

5. Strahlungshärtbare Zusammensetzung nach einem der vorstehenden Ansprüche, wobei das strahlungspolymerisierbare Monomer (A) ausgewählt ist aus der Gruppe bestehend aus N-Vinylpyrrolidon; N-Vinylcaprolactam; N-Vinyl-5-methyloxazolidinon; N-Vinylformamid; und beliebigen Mischungen davon.

6. Strahlungshärtbare Zusammensetzung nach einem der vorstehenden Ansprüche, umfassend:
a) 35 bis 65 Gew.-%, 40 bis 60 Gew.-% oder sogar 45 bis 55 Gew.-% des strahlungspolymerisierbaren Monomers (A);
b) 35 bis 65 Gew.-%, 40 bis 60 Gew.-% oder sogar 45 bis 55 Gew.-% des thermoplastischen Polyurethans (B); und
c) einen strahlungsempfindlichen Polymerisationsinitiator (C);
wobei sich die Gew.-% auf 100 Gew.-% des strahlungspolymerisierbaren Monomers (A) und des thermoplastischen Polyurethans (B) beziehen.

7. Strahlungshärtbare Zusammensetzung nach einem der vorstehenden Ansprüche, wobei das thermoplastische Polyurethan (B) ein zahlenmittleres Molekulargewicht (Mₙ) von nicht mehr als 60.000 g/mol, nicht mehr als 55.000 g/mol, nicht mehr als 50.000 g/mol, nicht mehr als 45.000 g/mol, nicht mehr als 40.000 g/mol, nicht mehr als 35.000 g/mol, nicht mehr als 30.000 g/mol, nicht mehr als 25.000 g/mol oder sogar nicht mehr als 20.000 g/mol aufweist.

8. Strahlungshärtbare Zusammensetzung nach einem der vorstehenden Ansprüche, die ferner ein weiteres strahlungspolymerisierbares Monomer (D), das sich von dem strahlungspolymerisierbaren Monomer (A) unterscheidet, oder ein weiteres strahlungspolymerisierbares Oligomer (E) umfasst.

9. Verfahren zur Herstellung einer strahlungshärtbaren Zusammensetzung nach einem der vorstehenden Ansprüche, wobei das Verfahren die folgenden Schritte umfasst:
a) Zusammenbringen des strahlungspolymerisierbaren Monomers (A) in Gegenwart des thermoplastischen Polyurethans (B), wodurch ein Mischmaterial gebildet wird;
b) gegebenenfalls Aussetzen des Mischmaterials thermischer Energie; und
c) gegebenenfalls Unterziehen des Mischmaterials einer mechanischen Durchmischung.

10. Verfahren zur Herstellung eines ausgehärteten Polymermaterials, umfassend die folgenden Schritte:
a) Bereitstellen einer strahlungshärtbaren Zusammensetzung nach einem der Ansprüche 1 bis 8; und
b) Aussetzen der strahlungshärtbaren Zusammensetzung aktinischer Strahlung.

11. Ausgehärtetes Polymermaterial, hergestellt durch ein Verfahren nach Anspruch 10, das einen Bruchdehnungswert von mehr als 50 %, mehr als 100 %, mehr als 150 %, mehr als 200 %, mehr als 250 %, mehr als 300 %, mehr als 350 %, mehr als 400 %, mehr als 450 %, mehr als 500 %, mehr als 550 %, mehr als 600 %, mehr als 650 % oder sogar mehr als 700 % aufweist, gemessen nach dem im experimentellen Teil beschriebenen Prüfverfahren.

12. Ausgehärtetes Polymermaterial nach Anspruch 11, das einen Zugfestigkeitswert von mehr als 2 MPa, mehr als 4 MPa, mehr als 5 MPa, mehr als 8 MPa, mehr als 10 MPa, mehr als 12 MPa, mehr als 15 MPa, mehr als 18 MPa, mehr als 20 MPa, mehr als 22 MPa, mehr als 24 MPa, mehr als 26 MPa, mehr als 28 MPa oder sogar mehr als 30 MPa aufweist, gemessen nach dem im experimentellen Teil beschriebenen Prüfverfahren.

13. Ausgehärtetes Polymermaterial nach einem der Ansprüche 11 oder 12, das einen Volumenschrumpfungswert von nicht mehr als 10 %, nicht mehr als 9,5 %, nicht mehr als 9 %, nicht mehr als 8,5 %, nicht mehr als 8 %, nicht mehr als 7,5 %, nicht mehr als 7 %, nicht mehr als 6,5 %, nicht mehr als 6 %, nicht mehr als 5,5 %, nicht mehr als 5 %, nicht mehr als 4,5 % oder sogar nicht mehr als 4 % aufweist, gemessen nach dem im experimentellen Teil beschriebenen Prüfverfahren.

14. Verwendung einer strahlungshärtbaren Zusammensetzung nach einem der Ansprüche 1 bis 8 in einem dreidimensionalen Druckverfahren, insbesondere in einem dreidimensionalen Druckverfahren unter Verwendung von Vat-(Photo-)Polymerisationstechniken.

15. Verwendung einer strahlungshärtbaren Zusammensetzung nach einem der Ansprüche 1 bis 8 zur Herstellung einer Beschichtung oder in einem Beschichtungsverfahren, zur Herstellung eines Klebstoffs oder in einem Klebeverfahren oder zur Herstellung eines Dichtstoffs oder in einem Abdichtungsverfahren.

## Revendications

1. Composition durcissable par rayonnement comprenant :
a) de 30 à 70 % en poids d'un monomère polymérisable par rayonnement (A) comprenant un groupement N-vinylamide ;
b) de 30 à 70 % en poids d'un polyuréthane thermoplastique (B) ayant un poids moléculaire moyen en nombre (Mₙ) non supérieur à 60 000 g/mole, le polyuréthane thermoplastique (B) étant obtenu à partir d'un polyol choisi dans le groupe constitué par les polyester polyols, les polyéther polyols, les polycaprolactone polyols, les polycarbonate polyols, et toutes combinaisons de ceux-ci ; et
c) un initiateur de polymérisation sensible à un rayonnement (C) ;
les % en poids étant basés sur 100 % en poids du monomère polymérisable par rayonnement (A) et du polyuréthane thermoplastique (B).

2. Composition durcissable par rayonnement selon la revendication 1, dans laquelle le monomère polymérisable par rayonnement (A) a la formule générale suivante (I) :
(L)CON(CH=CH₂)(Q) (I)
dans laquelle :
L est un radical hydrocarboné linéaire, ramifié ou cyclique, éventuellement substitué par des groupes alkyle, hydroxy ou alcoxy et/ou interrompu par des atomes d'oxygène ou d'azote ;
Q est un radical hydrocarboné linéaire, ramifié ou cyclique, éventuellement substitué par des groupes alkyle, hydroxy ou alcoxy et/ou interrompu par des atomes d'oxygène ou d'azote ; et
facultativement, L et Q peuvent être liés de façon covalente de sorte à former un lien ou une structure cyclique.

3. Composition durcissable par rayonnement selon l'une quelconque des revendications 1 et 2, dans laquelle le monomère polymérisable par rayonnement (A) possède la formule générale suivante (II) : 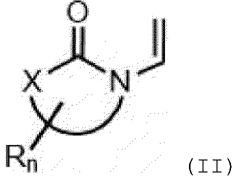 dans laquelle :
X est un atome d'oxygène ou de carbone ;
R est un groupe alkyle, hydroxyle ou alcoxy ; et
n est un entier de 0 à 6, de 0 à 5, de 0 à 4, de 0 à 3, ou même de 0 à 2.

4. Composition durcissable par rayonnement selon l'une quelconque des revendications précédentes, dans laquelle le monomère polymérisable par rayonnement (A) est choisi dans le groupe constitué par N-vinylpyrrolidone ; N-vinylpipéridone ; N-vinylcaprolactame ; N-vinyl-3-méthylpyrrolidone ; N-vinyl-4-méthylpyrrolidone ; N-vinyl-5-méthylpyrrolidone ; N-vinyl-3-éthylpyrrolidone ; N-vinyl-3-butylpyrrolidone ; N-vinyl-3,3-diméthylpyrrolidone ; N-vinyl-4,5-diméthylpyrrolidone ; N-vinyl-5,5-diméthylpyrrolidone ; N-vinyl-3,3,5-triméthylpyrrolidone ; N-vinyl-5-méthyl-5-éthylpyrrolidone ; N-vinyl-3,4,5-triméthyl-3-éthylpyrrolidone ; N-vinyl-6-méthyl-2-pipéridone ; N-vinyl-6-éthyl-2-pipéridone ; N-vinyl-3,5-diméthyl-2-pipéridone ; N-vinyl-4,4-diméthyl-2-pipéridone ; N-vinyl-6-propyl-2-pipéridone ; N-vinyl-3-octyle pipéridone ; N-vinyl-7-méthylcaprolactame ; N-vinyl-7-éthylcaprolactame ; N-vinyl-4-isopropylcaprolactame ; N-vinyl-5-isopropylcaprolactame ; N-vinyl-4-butylcaprolactame ; N-vinyl-5-butylcaprolactame ; N-vinyl-4-butylcaprolactame ; N-vinyl-5-tert-butylcaprolactame ; N-vinyl-4-octyle caprolactame ; N-vinyl-5-tert-octyle caprolactame ; N-vinyl-4-nonylcaprolactame ; N-vinyl-5-tert-nonylcaprolactame ; N-vinyl-3,7-diméthylcaprolactame; N-vinyl-3,5-diméthylcaprolactame; N-vinyl-4,6-diméthylcaprolactame; N-vinyl-3,5,7-triméthylcaprolactame; N-vinyl-2-méthyl-4-isopropylcaprolactame; N-vinyl-5-isopropyl-7-méthylcaprolactame; N-vinylformamide; N-vinylacétamide; N-vinylpropionamide; N-vinyl-N-méthylacétamide; N-vinyl-N-méthylpropionamide; N-vinyl-N-propylpropionamide; N-vinyloxazolidinone; N-vinyl-5-méthyloxazolidinone; N-vinyl-4-méthyloxazolidinone; N-vinyl-4,5-diméthyloxazolidinone; et tous mélanges de ceux-ci.

5. Composition durcissable par rayonnement selon l'une quelconque des revendications précédentes, dans laquelle le monomère polymérisable par rayonnement (A) est choisi dans le groupe constitué par N-vinylpyrrolidone; N-vinylcaprolactame; N-vinyl-5-méthyloxazolidinone; N-vinylformamide; et tous mélanges de ceux-ci.

6. Composition durcissable par rayonnement selon l'une quelconque des revendications précédentes, comprenant :
a) de 35 à 65 % en poids, de 40 à 60 % en poids ou même de 45 à 55 % en poids, du monomère polymérisable par rayonnement (A) ;
b) de 35 à 65 %, de 40 à 60 %, voire de 45 à 55 %, en poids, du polyuréthane thermoplastique (B) ; et
c) un initiateur de polymérisation sensible à un rayonnement (C) ;
les % en poids étant basés sur 100 % en poids du monomère polymérisable par rayonnement (A) et du polyuréthane thermoplastique (B).

7. Composition durcissable par rayonnement selon l'une quelconque des revendications précédentes, dans laquelle le polyuréthane thermoplastique (B) a un poids moléculaire moyen en nombre (Mₙ) non supérieur à 60 000 g/mole, non supérieur à 55 000 g/mole, non supérieur à 50 000 g/mole, non supérieur à 45 000 g/mole, non supérieur à 40 000 g/mole, non supérieur à 35 000 g/mole, non supérieur à 30 000 g/mole, non supérieur à 25 000 g/mole, ou même non supérieur à 20 000 g/mole.

8. Composition durcissable par rayonnement selon l'une quelconque des revendications précédentes, qui comprend en outre un autre monomère polymérisable par rayonnement (D) qui est différent du monomère polymérisable par rayonnement (A) ou un autre oligomère polymérisable par rayonnement (E).

9. Procédé pour la fabrication d'une composition durcissable par rayonnement selon l'une quelconque des revendications précédentes, le procédé comprenant les étapes de :
a) amener le monomère polymérisable par rayonnement (A) en présence du polyuréthane thermoplastique (B) formant ainsi un matériau de mélange ;
b) facultativement, soumettre le matériau de mélange à de l'énergie thermique ; et
c) éventuellement, soumettre le matériau de mélange à un mélange mécanique.

10. Procédé de fabrication d'un matériau polymérique durci, comprenant les étapes de :
a) fourniture d'une composition durcissable par rayonnement selon l'une quelconque des revendications 1 à 8 ; et
b) exposition de la composition durcissable par rayonnement à un rayonnement actinique.

11. Matériau polymérique durci produit par un procédé selon la revendication 10, qui a une valeur d'élongation à la rupture supérieure à 50 %, supérieure à 100 %, supérieure à 150 %, supérieure à 200 %, supérieure à 250 %, supérieure à 300 %, supérieure à 350 %, supérieure à 400 %, supérieure à 450 %, supérieure à 500 %, supérieure à 550 %, supérieure à 600 %, supérieure à 650 %, voire supérieure à 700 %, mesurée selon la méthode d'essai décrite dans la partie expérimentale.

12. Matériau polymérique durci selon la revendication 11, qui possède une valeur de résistance à la traction supérieure à 2 MPa, supérieure à 4 MPa, supérieure à 5 MPa, supérieure à 8 MPa, supérieure à 10 MPa, supérieure à 12 MPa, supérieure à 15 MPa, supérieure à 18 MPa, supérieure à 20 MPa, supérieure à 22 MPa, supérieure à 24 MPa, supérieure à 26 MPa, supérieure à 28 MPa, voire supérieure à 30 MPa, lorsqu'elle est mesurée selon la méthode d'essai décrite dans la partie expérimentale.

13. Matériau polymérique durci selon l'une quelconque des revendications 11 ou 12, qui a une valeur de retrait volumétrique non supérieure à 10 %, non supérieure à 9,5 %, non supérieure à 9 %, non supérieure à 8,5 %, non supérieure à 8 %, non supérieure à 7,5 %, non supérieure à 7 %, non supérieure à 6,5 %, non supérieure à 6 %, non supérieure à 5,5 %, non supérieure à 5 %, non supérieure à 4,5 %, voire pas plus de 4 %, lorsqu'elle est mesurée selon la méthode d'essai décrite dans la partie expérimentale.

14. Utilisation d'une composition durcissable par rayonnement selon l'une quelconque des revendications 1 à 8 dans un procédé d'impression tridimensionnelle, en particulier dans un procédé d'impression tridimensionnelle utilisant des techniques de (photo)polymérisation en cuve.

15. Utilisation d'une composition durcissable par rayonnement selon l'une quelconque des revendications 1 à 8 pour la fabrication d'un revêtement ou dans un procédé de revêtement, pour la fabrication d'un adhésif ou dans un procédé d'adhésion, ou pour la fabrication d'un agent d'étanchéité ou dans un procédé d'étanchéification.
